(19) Europäisches Patentamt

European Patent Office

Office européen des brevets

(11) **EP 2 855 885 B1**

(12) **FASCICULE DE BREVET EUROPÉEN**

(45) Date de publication et mention
de la délivrance du brevet:
**14.07.2021 Bulletin 2021/28**

(21) Numéro de dépôt: **13731376.3**

(22) Date de dépôt: **30.05.2013**

(51) Int Cl.:
*F02C 7/14* *(2006.01)*    *F02C 7/224* *(2006.01)*
*F01D 25/20* *(2006.01)*

(86) Numéro de dépôt international:
**PCT/FR2013/051221**

(87) Numéro de publication internationale:
**WO 2013/178956 (05.12.2013 Gazette 2013/49)**

(54) **CIRCUIT DE FLUIDE DANS UNE TURBOMACHINE**

FLÜSSIGKEITSKREISLAUF IN EINEM TURBINENTRIEBWERK

FLUID CIRCUIT IN A TURBINE ENGINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **01.06.2012 FR 1255129**

(43) Date de publication de la demande:
**08.04.2015 Bulletin 2015/15**

(73) Titulaire: **Safran Aircraft Engines
75015 Paris (FR)**

(72) Inventeurs:
• **MOTTET, Lauranne, Sophie
F-77550 Moissy Cramayel Cedex (FR)**

• **POTEL, Nicolas
F-77550 Moissy Cramayel Cedex (FR)**
• **VERTENOEUIL, Philippe
F-77550 Moissy Cramayel Cedex (FR)**

(74) Mandataire: **Ernest Gutmann - Yves Plasseraud
S.A.S.
c/o Plasseraud IP
66, rue de la Chaussée d'Antin
75440 Paris Cedex 09 (FR)**

(56) Documents cités:
**EP-A1- 0 307 264    FR-A- 1 014 955
FR-A- 1 390 562    GB-A- 300 245
GB-A- 600 552    US-A- 4 041 697**

• **None**

# Description

L'invention concerne un dispositif de commande de l'alimentation en fluide d'un équipement tel qu'un échangeur de chaleur agencé par exemple dans une turbomachine.

De façon connue, une turbomachine comprend un circuit d'huile pour l'alimentation en huile de lubrification d'équipements tels que notamment des paliers de roulement ou des organes d'engrenages, et comprend également un circuit de carburant alimentant des injecteurs montés dans une chambre de combustion.

Il est connu de relier les circuits d'huile et de carburant par des échangeurs de chaleur dans le but d'éviter un échauffement important de l'huile de lubrification, l'huile étant refroidie par échange de chaleur avec le carburant.

A cette fin, on utilise un échangeur de chaleur principal huile/carburant agencé dans les circuits d'huile et de carburant en aval ou en amont d'un échangeur de chaleur huile/air monté dans le circuit d'huile. L'échangeur de chaleur huile/air est parcouru ou balayé par un flux d'air provenant de l'extérieur de la turbomachine.

L'échangeur de chaleur huile/air est nécessaire pour refroidir l'huile lorsque, pour certains points de fonctionnement de la turbomachine, l'échangeur de chaleur huile/carburant ne permet pas de suffisamment refroidir l'huile.

Toutefois, il est préférable que l'échangeur de chaleur huile/air ne soit pas en fonctionnement durant toute la phase d'utilisation de la turbomachine.

En effet, lors d'une phase de décollage en conditions froides de fonctionnement pouvant induire la formation de givre dans le carburant, on souhaite que l'huile réchauffe le carburant à travers l'échangeur de chaleur principal huile/carburant, l'huile ne devant alors pas circuler dans l'échangeur de chaleur huile/air pour éviter son refroidissement. De même, durant une phase de croisière, la température de l'huile ne doit pas descendre en dessous d'une valeur seuil pour éviter la rétention d'huile dans les enceintes de la turbomachine. Ainsi, dans cette configuration, il est nécessaire que l'huile ne circule pas dans l'échangeur de chaleur huile/air pour éviter que sa température ne passe sous la valeur seuil.

Pour contrôler le débit d'air passant dans l'échangeur de chaleur huile/air, il est connu d'utiliser un volet d'obturation de l'alimentation en air de cet échangeur, qui est commandé électriquement par un vérin en fonction de la température de l'huile mesurée par un capteur. Si cette solution s'avère efficace, elle nécessite l'installation d'un vérin et d'une voie électrique de commande du vérin reliée à un régulateur numérique de moteur à pleine autorité (connu sous l'acronyme anglais de FADEC signifiant « Full Authority Digital Engine Control »), ce qui est pénalisant en terme de masse et d'encombrement sur la turbomachine. De plus, dans certains types de moteurs, l'échangeur de chaleur huile/air est installé dans la veine d'air secondaire circulant autour du moteur et l'ajout d'un volet d'obturation dans la veine d'air secondaire entrainerait une perte de charge importante augmentant la consommation en carburant, ce qui n'est pas acceptable.

Il est également connu de monter un clapet thermostatique dans une conduite de dérivation à l'entrée de l'échangeur. A l'état fermé du clapet, le débit d'huile passe intégralement dans l'échangeur de chaleur huile/air et à l'état ouvert du clapet, le débit d'huile se répartit entre l'échangeur de chaleur huile/air et la conduite de dérivation. Dans un mode de réalisation, le clapet contient de la cire qui est à l'état solide à basse température. Ainsi, lorsque la température d'huile augmente, la cire se liquéfie et entraine le clapet en fermeture et lorsque la température diminue à nouveau, la cire se re-solidifie et le clapet s'ouvre. La composition de la cire détermine la température d'ouverture/fermeture du clapet.

Ce type de configuration ne permet pas de stopper complètement la circulation d'huile à travers l'échangeur de chaleur huile/air. De plus, un tel clapet ne peut pas subir un nombre important de cycles d'ouverture/fermeture. Ainsi, pour limiter le nombre de cycles d'ouverture/fermeture du clapet, on le commande de manière à le laisser fermé pour toutes les phases de fonctionnement à l'exception de celle où la température de l'huile est la plus faible correspondant à des conditions extérieures extrêmement froides. Toutefois, il s'avère que pour des températures intermédiaires où l'huile est considérée comme froide, le clapet est fermé et l'huile se refroidit et peut descendre en dessous de la température seuil acceptable pour laquelle on observe une rétention d'huile dans les enceintes de la turbomachine. Si on augmente la température seuil d'ouverture/fermeture du clapet, on augmente aussi le nombre de cycles d'ouverture/fermeture car il existe de nombreuses phases de vol où le carburant peut refroidir ou réchauffer suffisamment l'huile à travers l'échangeur de chaleur huile/carburant pour que l'huile atteigne la température seuil. Cela à pour conséquence de diminuer la fiabilité du clapet.

Enfin, il est aussi connu d'agencer un clapet hydraulique dans une conduite montée en dérivation sur l'échangeur de chaleur huile/air, ce clapet étant prévu pour ouvrir la conduite de dérivation pour un écart de pression seuil donné correspondant à une perte de charge donnée dans l'échangeur de chaleur huile/air.

Avec cette solution ainsi qu'avec celle proposant un clapet thermostatique, le débit d'huile n'est pas intégralement dérivé vers la conduite de dérivation quand le clapet est ouvert, ce qui contribue à un refroidissement plus ou moins important mais permanent de l'huile du circuit d'huile sur toutes les phases de fonctionnement. De plus, pour assurer une dérivation du débit de fluide pour les températures intermédiaires, il faut que le seuil de pression soit relativement haut, ce qui induit un positionnement du clapet en position ouverte pour de nombreuses conditions de fonctionnement.

Dans le cas où l'augmentation de pression est due à un fort débit d'huile ou à une température faible de l'huile augmentant sa viscosité et donc la pression en amont de l'échangeur de chaleur huile/air, l'ouverture du clapet va induire une diminution de la perte de charge dans l'échangeur de chaleur huile/air qui peut provoquer une re-fermeture du clapet. Il s'ensuit que le fonctionnement du clapet peut être instable, ce qui rend impossible son utilisation pour une commande fiable de la dérivation du débit d'huile.

Les demandes FR2951228, FR1061138 et FR1157953 de la demanderesse décrivent des architectures de circuits d'huile et de carburant dans une turbomachine. Le document US3554222 décrit une valve contrôlant automatiquement un débit.

L'invention a notamment pour but d'apporter une solution simple, économique et efficace aux problèmes mentionnés ci-dessus, permettant d'éviter les inconvénients des solutions connues.

A cette fin, elle propose un dispositif de commande de l'alimentation en fluide d'un équipement, tel qu'un échangeur de chaleur, comprenant un distributeur de fluide monté dans un circuit de fluide et comportant un tiroir déplaçable entre deux positions dans une première desquelles il autorise la circulation du fluide dans l'équipement et dans une seconde desquelles il empêche la circulation de fluide dans l'équipement, caractérisé en ce qu'une restriction à écoulement laminaire est agencée dans le circuit de fluide en amont du distributeur, et en ce qu'il comprend des moyens de déplacement du tiroir du distributeur de fluide entre ses deux positions par la perte de charge du fluide dans la restriction à écoulement laminaire.

Selon l'invention, le débit d'huile traversant l'équipement peut être intégralement stoppé évitant ainsi son refroidissement en conditions froides de fonctionnement où l'on souhaite que l'huile ne soit pas refroidie. De plus, la commande du déplacement du tiroir se fait par une perte de charge, c'est-à-dire une différence pression entre l'amont et l'aval d'une restriction laminaire agencée en amont du distributeur et dans laquelle circule tout le débit de fluide, ce qui rend le positionnement du tiroir insensible aux pertes de charge dans l'équipement contrairement à la technique antérieure utilisant un clapet hydraulique.

L'utilisation d'une restriction en régime laminaire permet que la perte de charge mesurée entre l'entrée et la sortie de la restriction dépende à la fois du débit de fluide et de la température du fluide, contrairement à une restriction fonctionnant en régime turbulent dont la perte de charge ne dépend que du débit.

En conditions froides, la faible température du fluide traversant la restriction laminaire entraine une forte perte de charge, ce qui permet de commander le positionnement du tiroir dans sa seconde position, empêchant la circulation de fluide dans l'équipement.

L'augmentation de la température du fluide induit une réduction de la perte de charge dans la restriction laminaire et un positionnement du tiroir dans sa première position permettant la circulation de fluide dans l'équipement.

De même, en cas d'augmentation du débit d'huile, la perte de charge dans la restriction laminaire augmente, ce qui permet de faire passer le tiroir dans sa seconde position.

Lorsque le tiroir est dans sa seconde position, la circulation de fluide peut être établie dans une conduite de dérivation de l'équipement.

Selon une réalisation de l'invention, les moyens de déplacement comprennent deux chambres séparées par le tiroir, dont l'une est en communication fluidique avec l'entrée de la restriction laminaire et l'autre est en communication fluidique avec la sortie de la restriction laminaire, les moyens de déplacement comprenant en outre des moyens de rappel prévus et configurés pour amener le tiroir dans sa première position lorsque la différence de pression entre l'entrée et la sortie de la restriction laminaire est inférieure à un seuil prédéterminé.

Dans cette réalisation, la perte de charge dans la restriction laminaire pilote directement le déplacement du tiroir moyennant l'utilisation de moyens de rappel dont le calibrage permet de déterminer le seuil de perte de charge à partir duquel le tiroir commute entre les première et second positions.

Avantageusement, le distributeur comprend au moins une sortie de fluide reliée à une conduite de dérivation de l'équipement, le tiroir du distributeur autorisant la circulation de fluide vers la conduite de dérivation lorsque le tiroir est dans sa seconde position et empêchant la circulation de fluide dans la conduite de dérivation lorsque le tiroir est dans sa première position.

Cette conduite de dérivation permet de continuer à alimenter d'autres équipements avec le fluide lorsque le tiroir bloque la circulation de fluide vers l'équipement précité.

En pratique, le distributeur comprend donc une première et une seconde sorties, la première sortie servant à l'alimentation de l'équipement en fluide lorsque le tiroir est dans sa première position et la seconde sortie servant à la dérivation du fluide dans la conduite de dérivation lorsque le tiroir est dans sa seconde position.

Selon une autre caractéristique de l'invention, la conduite de dérivation est intégrée à un support de l'équipement et s'étend au moins en partie à proximité immédiate de l'équipement pour une transmission de chaleur entre la conduite de dérivation et l'équipement à travers le support.

Cet agencement est particulièrement intéressant lorsque le fluide est de l'air et l'équipement est un échangeur de chaleur huile/air. En effet, lorsque le tiroir est dans sa seconde position, la conduite de dérivation permet de réchauffer par conduction l'huile présente dans l'échangeur de chaleur huile/air, évitant ainsi à l'huile stagnante refroidie par l'air de former un bouchon pouvant obturer l'échangeur de chaleur huile/air et bloquer la circulation d'huile lorsque le tiroir est ensuite déplacé dans sa première position.

Selon une autre caractéristique de l'invention, le dispositif comprend un clapet de surpression monté dans un canal reliant l'amont du distributeur à l'aval de l'équipement, ce clapet étant configuré pour autoriser la circulation de fluide dans le canal lorsque la perte de charge dans l'équipement est supérieure à un seuil prédéterminé.

Ainsi, en cas de blocage du tiroir par exemple par grippage ou en cas d'obstruction de la circulation de fluide dans l'équipement par formation d'un bouchon d'huile froide ou d'éléments polluants par exemple, le clapet de surpression assure une continuité de la circulation du fluide en aval de l'équipement.

Dans une réalisation particulière de l'invention, les moyens de rappel du tiroir comprennent un ressort de compression agencé dans la chambre qui est reliée à la sortie de la restriction laminaire, entre une face du tiroir et une paroi de fond de ladite chambre.

Avantageusement, la restriction laminaire est formée par un tube à surface interne rugueuse de manière à accentuer le frottement des couches périphériques du fluide à écoulement laminaire sur la paroi interne du tube.

La surface interne du tube possède idéalement une rugosité définie par un $R_a$ d'environ 15 $\mu$m avec une précision de +/- 5%. Il est à noter que l'indication d'une valeur de Ra seule est considéré comme suffisante dans l'état de la technique pour indiquer la rugosité d'une canalisation.

Avantageusement, la restriction laminaire est formée par un tube ayant une longueur supérieure à son diamètre.

Le tube peut par exemple avoir une longueur de l'ordre de 30 cm avec une précision de +/- 1,5 % et un diamètre de l'ordre de 8,15 mm avec une précision de +/- 1,5 %.

L'augmentation de la rugosité de la surface interne du tube et/ou le dimensionnement particulier en longueur du tube permettent de générer plus de frottements au sein du fluide à écoulement laminaire, ce qui accentue la perte de charge à travers la restriction laminaire en particulier lorsque le fluide présente une forte viscosité.

L'invention concerne également une turbomachine, telle qu'un turboréacteur ou un turbopropulseur d'avion, comprenant au moins un dispositif tel que décrit ci-dessus, et dans laquelle le fluide est de l'huile et l'équipement un échangeur de chaleur huile/air monté en amont d'un échangeur de chaleur huile/carburant.

D'autres avantages et caractéristiques de l'invention apparaîtront à la lecture de la description suivante faite à titre d'exemple non limitatif et en référence aux dessins annexés dans lesquels :

- la figure 1 est une vue schématique en perspective d'une turbomachine d'un type connu ;
- la figure 2 est une représentation schématique partielle d'un circuit d'huile selon la technique antérieure ;

- la figure 3 est une représentation schématique d'un dispositif selon l'invention.

De manière bien connue de l'homme du métier, une turbomachine 10 comprend une chambre de combustion 12, les gaz de combustion issus de la chambre 12 entraînant une turbine haute pression 14 et une turbine basse pression 16. La turbine haute pression 14 est couplée par un arbre à un compresseur haute pression agencé en amont de la chambre de combustion 12 et alimentant cette dernière en air sous pression. La turbine basse pression 16 est couplée par un autre arbre à une roue de soufflante 18 agencée à l'extrémité amont de la turbomachine 10.

Une boite de transmission 20, ou boite d'accessoires, est reliée par une prise de puissance mécanique 22 à l'arbre de turbine haute pression et comprend un ensemble de pignons d'entrainement de différents équipements de la turbomachine, tels que des pompes et des générateurs, notamment électriques.

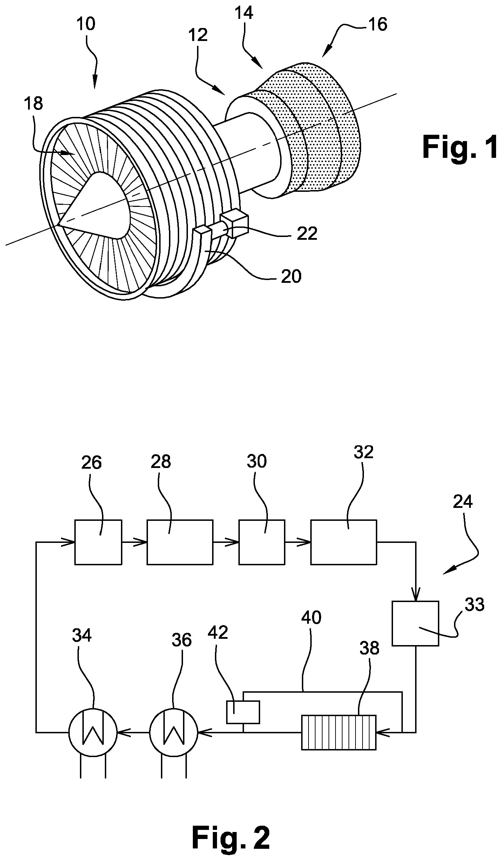

La figure 2 représente d'un circuit d'huile de la turbomachine de la figure 1.

Le circuit d'huile 24 comprend, de l'amont vers l'aval dans le sens d'écoulement de l'huile, différents ensembles 26 utilisant de l'huile de lubrification et/ou de refroidissement, des pompes de récupération 28 permettant la recirculation d'huile depuis les équipement vers un réservoir 30, des pompes d'alimentation 32 et un filtre 33 .

Outre l'huile utilisée pour la lubrification et le refroidissement de la turbomachine, notamment des paliers d'arbres de turbines et de compresseurs, le flux d'huile global peut comprendre de l'huile utilisée pour la lubrification de la boite d'accessoires 20 et pour la lubrification et le refroidissement d'un ou plusieurs générateurs électriques.

Le circuit d'huile comprend trois échangeurs de chaleur montés en série entre le filtre 33 et les ensembles 26, à savoir un échangeur de chaleur principal huile/carburant 34, un échangeur de chaleur secondaire huile/carburant 36 et un échangeur de chaleur huile/air 38.

Ainsi, en fonctionnement, en sortie des pompes d'alimentation 32, l'huile traverse l'échangeur de chaleur huile/air 38, l'échangeur de chaleur secondaire huile/carburant 36 puis l'échangeur de chaleur principal huile/carburant 34. Une conduite 40 est montée dans le circuit d'huile en dérivation sur l'échangeur de chaleur huile/air 38 et comprend une entrée agencée entre la sortie du filtre 33 et l'entrée de l'échangeur de chaleur huile/air 38 et une sortie agencée entre la sortie de l'échangeur de chaleur huile/air 38 et l'entrée de l'échangeur de chaleur secondaire huile/carburant 36. Un clapet hydraulique 42 est monté dans la conduite de dérivation et commande le passage du débit d'huile dans l'échangeur huile/air 38 ou à travers la conduite de dérivation 40 et l'échangeur de chaleur huile/air 38. L'huile sortant de l'échangeur de chaleur principal huile/carburant 34 circule ensuite vers le réservoir d'huile 30.

L'échangeur de chaleur huile/air 38 peut être du type à refroidissement de surface, c'est-à-dire comprenant des conduits d'huile balayés par un flux d'air froid provenant d'un flux d'air de contournement du turboréacteur communément appelé flux d'air secondaire. Un tel échangeur est par exemple logé sur une paroi du canal du flux secondaire immédiatement en aval de la soufflante 18 (figure 1).

L'échangeur de chaleur huile/air 38 peut aussi être du type à plaques air/huile et traversé par un flux d'air prélevé dans le flux d'air secondaire et réinjecté en sortie dans celui-ci.

Comme indiqué précédemment, en conditions froides de fonctionnement, le clapet s'ouvre pour autoriser le passage d'huile à travers la conduite de dérivation 40. Toutefois, l'échangeur de chaleur huile/air 38 reste alimenté en huile, ce qui contribue à refroidir davantage l'huile. De plus, ce type de clapet peut avoir un fonctionnement instable comme indiqué précédemment.

L'invention apporte une solution à ces problèmes ainsi qu'à ceux mentionnés précédemment en intégrant une restriction laminaire 44 en amont d'un organe 46 de distribution de fluide vers l'échangeur de chaleur huile/air 48, et en commandant l'ouverture ou la fermeture de l'alimentation en huile de l'échangeur de chaleur huile/air au moyen de la perte de charge dans la restriction laminaire, cette perte de charge dépendant du débit et de la température de l'huile.

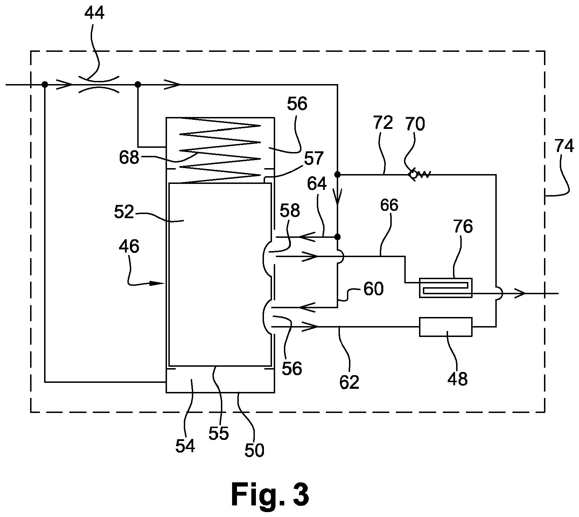

La figure 3 représente un dispositif de commande de l'alimentation en fluide de l'échangeur de chaleur huile/air selon l'invention.

Ce dispositif comprend un distributeur 46 comportant un corps creux 50 tel qu'un cylindre dans lequel est monté à coulissement un tiroir 52 séparant hermétiquement une première chambre 54 et une seconde chambre 56. L'entrée de la restriction laminaire 44 est en communication fluidique avec la première chambre 54 et sa sortie est en communication fluidique avec la seconde chambre 56, qui est opposée à la première chambre 54 par rapport au tiroir 52.

Le tiroir 52 comprend deux évidements ou fentes 56, 58 espacés axialement l'un de l'autre le long de l'axe de déplacement du tiroir 52. Un premier évidement 56 du tiroir 52 est destiné à relier une première conduite d'entrée 60 et une première conduite de sortie 62. Le deuxième évidement 58 est destiné à relier une deuxième conduite d'entrée 64 et une deuxième conduite de sortie 66.

L'échangeur de chaleur huile/air 48 est monté dans la première conduite de sortie 62 du distributeur 46. La seconde conduite de sortie 66 forme une conduite de dérivation de l'échangeur de chaleur huile/air 48, débouchant en aval de l'échangeur de chaleur huile/air 48.

La largeur de chaque évidement 56, 58 est déterminée de manière à permettre la circulation de l'huile entre les conduites d'entrée 60, 64 et de sortie 62, 66 associées. En outre, l'espacement entre les évidements 56, 58 du tiroir est déterminé de manière à ce que, dans une première position (figure 3), la première conduite d'entrée communique par l'intermédiaire du premier évidement 56 avec la première conduite de sortie 62, la communication fluidique entre la seconde conduite d'entrée 64 et la seconde conduite de sortie ou conduite de dérivation 66 étant bloquée par une paroi du tiroir 52, et que dans une seconde position, la seconde conduite d'entrée 64 communique par l'intermédiaire du second évidement 58 avec la seconde conduite de sortie ou conduite de dérivation 66, la communication fluidique entre la première conduite d'entrée 60 et la première conduite de sortie 62 étant bloquée par une paroi du tiroir 52.

Un ressort de compression 68 est monté dans la seconde chambre 56 reliée à la sortie de la restriction laminaire 44, entre une face du tiroir 52 et une paroi de fond de la seconde chambre 56, de manière à exercer une force tendant à déplacer le tiroir 52 dans le sens d'une augmentation du volume de la seconde chambre 56.

La compression du ressort 68 est déterminée de manière à permettre un déplacement du tiroir dans sa première position lorsque la différence de pression entre l'entrée et la sortie de la restriction laminaire est inférieure à un seuil prédéterminé. Lorsque la différence de pression entre l'entrée et la sortie de la restriction laminaire 44 est supérieure à ce seuil, la somme des forces exercées par le ressort sur le tiroir et par l'huile dans la seconde chambre 56 devient inférieure à la force exercée par l'huile dans la première chambre 54, ce qui déplace le tiroir 52 dans sa seconde position.

On comprend ainsi que l'écart de pression pour lequel on veut que le tiroir commute de sa première position à sa deuxième position est déterminé par calibration de la force du ressort ainsi que par les surfaces 55, 57 du tiroir 52 sur lesquelles s'appliquent la pression de l'huile.

Le dispositif comprend également un clapet de surpression 70 monté dans un canal 72 reliant l'amont du distributeur 46 à l'aval de l'échangeur de chaleur huile/carburant 48. Le clapet 70 est configuré pour autoriser la circulation de fluide dans le canal 72 lorsque la pression en amont du clapet 70 est supérieure à un seuil prédéterminée. Ce seuil peut être atteint en cas de blocage du tiroir 52 par grippage par exemple ou de formation d'un bouchon d'huile froide visqueuse dans l'échangeur de chaleur huile/air 48.

L'ensemble du dispositif selon l'invention peut être intégré dans un carter 74. Pour cela, la conduite de dérivation 66 et l'échangeur de chaleur huile/air 48 sont intégrés au carter 74.

La conduite de dérivation 66 de l'échangeur de chaleur huile/air 48 comprend au moins une partie 76 qui s'étend à proximité immédiate de l'échangeur de chaleur huile/air 48 pour permettre un échange de chaleur par conduction thermique dans la matière du carter.

Lorsque le tiroir 52 est dans sa seconde position interdisant la circulation d'huile vers l'échangeur de chaleur huile/air 48, l'huile présente dans l'échangeur de chaleur huile/air continue à être refroidie par l'air et peut former un bouchon d'huile bloquant la circulation d'huile dans l'échangeur de chaleur huile/air 48 lorsque le tiroir 52 est commuté dans sa première position. La conduite 76 formée à proximité immédiate de l'échangeur de chaleur huile/air 48 permet de réchauffer l'huile stagnante dans l'échangeur de chaleur huile/air 48.

Le dispositif selon l'invention est, par exemple, intégré au circuit d'huile de la figure 2 entre la sortie du filtre 33 et l'entrée de l'échangeur de chaleur secondaire huile/carburant 36 et remplace l'échangeur de chaleur huile/air 38, la conduite de dérivation 40 et le clapet 42 décrits en référence à la figure 2.

L'utilisation d'une restriction 44 laminaire en amont du distributeur permet que la perte de charge dans la restriction 44 dépende à la fois du débit d'huile dans la restriction et de la température de l'huile.

Le débit est donné par la relation suivante :

$$Q = ks \times \sqrt{\frac{\Delta P}{\rho}}$$

où

- Q représente le débit à travers la restriction laminaire 44 en L/h,
- ks représente le coefficient de perte de charge de la restriction 44 et dépend de l'état de surface et de la géométrie (longueur, diamètre) de la restriction laminaire 44. Ce coefficient est déterminé de manière empirique,
- ΔP représente la perte de charge entre l'entrée et la sortie de la restriction laminaire 44 en bars, et
- p représente la masse volumique de l'huile en Kg/L.

La masse volumique p dépend de la température de l'huile et augmente lorsque la température diminue.

On comprend que pour atteindre une perte de charge donnée dans la restriction laminaire, il suffit d'avoir une restriction laminaire ayant le coefficient ks adéquat et que pour cela il suffit de réaliser une restriction laminaire ayant les caractéristiques géométriques (longueur, diamètre) et d'état de surface adéquates.

Dans une réalisation particulière de l'invention, la restriction laminaire 44 est formée par un tube à surface interne rugueuse de manière à générer une perte de charge par frottement dans la restriction laminaire 44. Un tube de cette conception permet en particulier d'accentuer le frottement des couches périphériques du fluide sur la paroi interne du tube, ce qui accentue la perte de charge à travers la restriction laminaire en particulier lorsque le fluide présente une forte viscosité.

En pratique, le tube peut avoir une longueur de l'ordre de 30 cm et un diamètre de l'ordre de 2 cm.

Lors d'un fonctionnement à froid de la turbomachine, la masse volumique de l'huile étant plus importante qu'à chaud, il en résulte une augmentation de la différence de pression aux bornes de la restriction laminaire 44, ce qui entraine un déplacement du tiroir 52 dans sa seconde position interdisant la circulation d'huile vers l'échangeur de chaleur huile/air 48. On évite ainsi de refroidir l'huile laquelle sert à réchauffer le carburant par l'intermédiaire des échangeurs principal 34 et secondaire 36 de chaleur huile/carburant.

Lorsque la température de l'huile augmente, la différence de pression dans la restriction laminaire 44 diminue, entraînant, pour une valeur seuil de différence de pression, le déplacement du tiroir 52 dans sa première position autorisant la circulation d'huile à travers l'échangeur de chaleur huile/air 48.

Lors d'une phase de décollage, le débit d'huile dans la restriction 44 augmente fortement induisant une nouvelle augmentation de la perte de charge dans la restriction laminaire 44, entrainant un déplacement du tiroir 52 dans sa seconde position. Le dispositif selon l'invention est calibré de manière à ce que pour un décollage par temps froid le tiroir 52 soit dans sa seconde position et que pour un décollage par temps chaud le tiroir 52 soit dans sa première position.

En phase de croisière où la température extérieure est froide, le tiroir est maintenu dans sa seconde position du fait de la faible température de l'huile.

La restriction laminaire 44 introduit une perte de charge supplémentaire dans le circuit d'huile qu'il est souhaitable de minimiser. Pour cela, il est préférable d'avoir des surfaces d'application de la pression importantes de chaque côté du tiroir 52 afin que la différence de pression aux bornes de la restriction laminaire 44 se traduise par une différence nette de force appliquée au tiroir 52. Toutefois, l'encombrement du distributeur 46 ne doit pas être trop important pour éviter une augmentation importante de la masse du dispositif 74.

Le distributeur décrit en référence à la figure 3 comprend deux positions du tiroir 52 et quatre voies de communication fluidique. Le distributeur pourrait aussi comprendre deux positions du tiroir 52 et trois voies de communication fluidique comportant une entrée d'huile et deux sorties d'huile, l'entrée d'huile alimentant sélectivement selon la position du tiroir l'une ou l'autre des sorties d'huile. Un tel distributeur trois voies présente une zone de transition pour le basculement de la circulation d'huile dans la conduite de dérivation 66 ou vers l'échangeur de chaleur huile/air 48 et présente donc un comportement dynamique moins bon qu'un distributeur quatre voies ayant deux entrées et deux sorties dédiées pour la circulation de fluide vers l'échangeur de chaleur huile/air 48 et dans la conduite de dérivation 66.

Dans une variante de l'invention, le ressort pourrait être agencé dans la première chambre 54 et configuré de manière à travailler en traction, ce qui permettrait un déplacement du tiroir identique à ce qui a été décrit précédemment.

Dans une autre variante de l'invention, les première 54 et seconde 56 chambres du distributeur 46 pourraient être en communication fluidique avec un composant déjà présent dans le circuit d'huile en amont du dispositif 74 et agissant comme une restriction laminaire.

Le dispositif selon l'invention pourrait être utilisé de la même manière avec un échangeur de chaleur utilisant un autre couple de fluide que l'huile et l'air. On pourrait ainsi utiliser le dispositif selon l'invention sur un échangeur de chaleur huile/carburant ou un échangeur air/carburant. Dans le cas d'un échange de chaleur huile/carburant, le fluide pourrait être du carburant que l'on dérive dans une conduite de dérivation par la perte de charge de carburant dans une restriction laminaire de manière similaire à ce qui a été décrit ci-dessus.

**Revendications**

1. Dispositif de commande de l'alimentation en fluide d'un équipement (48), tel qu'un échangeur de chaleur, comprenant un distributeur de fluide (46) monté dans un circuit de fluide et comportant un tiroir (52) déplaçable entre deux positions dans une première desquelles il autorise la circulation du fluide dans l'équipement (48) et dans une seconde desquelles il empêche la circulation de fluide dans l'équipement (48), **caractérisé en ce qu'**une restriction à écoulement laminaire (44) est agencée dans le circuit de fluide en amont du distributeur (46), et **en ce qu'**il comprend des moyens de déplacement du tiroir du distributeur de fluide entre ses deux positions par la perte de charge du fluide dans la restriction à écoulement laminaire (44).

2. Dispositif selon la revendication 1, **caractérisé en ce que** les moyens de déplacement comprennent deux chambres (54, 56) séparées par le tiroir (52) dont l'une est en communication fluidique avec l'entrée de la restriction laminaire (44) et l'autre est en communication fluidique avec la sortie de la restriction laminaire (44), les moyens de déplacement comprenant en outre des moyens de rappel (68) prévus et configurés pour amener le tiroir (52) dans sa première position lorsque la différence de pression entre l'entrée et la sortie de la restriction laminaire (44) est inférieure à un seuil prédéterminé.

3. Dispositif selon la revendication 2, **caractérisé en ce que** les moyens de rappel du tiroir comprennent un ressort de compression (68) agencé dans la chambre (56) qui est reliée à la sortie de la restriction laminaire (44), entre une face du tiroir (52) et une paroi de fond de ladite chambre (56).

4. Dispositif selon l'une des revendications 1 à 3, **caractérisé en ce que** le distributeur (46) comprend au moins une sortie de fluide reliée à une conduite de dérivation (66) de l'équipement (48), le tiroir (52) du distributeur (46) autorisant la circulation de fluide vers la conduite de dérivation (66) lorsque le tiroir (52) est dans sa seconde position et empêchant la circulation de fluide dans la conduite de dérivation (66) lorsque le tiroir (52) est dans sa première position.

5. Dispositif selon la revendication 4, **caractérisé en ce que** la conduite de dérivation (66) est intégrée à un support (74) de l'équipement (48) et s'étend au moins en partie à proximité immédiate de l'équipement (48) pour une transmission de chaleur entre la conduite de dérivation (66) et l'équipement (48) à travers le support (74).

6. Dispositif selon l'une des revendications précédentes, **caractérisé en ce qu'**il comprend un clapet de surpression (70) monté dans un canal (72) reliant l'amont du distributeur (46) à l'aval de l'équipement (48), ce clapet (70) étant configuré pour autoriser la circulation de fluide dans le canal (72) lorsque la perte de charge dans l'équipement (48) est supérieure à un seuil prédéterminé.

7. Dispositif selon l'une des revendications précédentes, **caractérisé en ce que** la restriction laminaire (44) est formée par un tube à surface interne rugueuse.

8. Dispositif selon la revendication 7, **caractérisé en ce que** la surface interne du tube possède une rugosité définie par un $R_a$ d'environ 15 $\mu$m avec une précision de +/- 5%.

9. Dispositif selon l'une des revendications précédentes, **caractérisé en ce que** la restriction laminaire est formée par un tube ayant une longueur supérieure à son diamètre.

10. Dispositif selon la revendication 9, **caractérisé en ce que** le tube a une longueur de l'ordre de 30 cm avec une précision de +/- 1,5% et un diamètre de l'ordre de 8,15 mm avec une précision de +/- 1,5%.

11. Turbomachine, telle qu'un turboréacteur ou un turbopropulseur d'avion, **caractérisée en ce qu'**elle comprend au moins un dispositif selon l'une des revendications précédentes.

12. Turbomachine selon la revendication 11, **caractérisée en ce que** le fluide est de l'huile et l'équipement est un échangeur de chaleur huile/air (48) monté en amont d'un échangeur de chaleur huile/carburant (34).

**Patentansprüche**

1. Vorrichtung zur Steuerung der Fluidzufuhr zu einer Einrichtung (48), wie etwa einem Wärmetauscher, mit einem Fluidverteiler (46), der in einem Fluidkreislauf angeordnet ist und einen Schieber (52) aufweist, der zwischen zwei Positionen beweglich ist, wovon in der ersten Position die Zirkulation des Fluids in die Einrichtung (48) gestattet ist und in der zweiten Position die Zirkulation des Fluids in die Einrichtung (48),
   **dadurch gekennzeichnet, dass**
   eine Laminarströmungsverengung (44) in dem Fluidkreislauf stromaufwärts des Verteilers (46) angeordnet ist
   und dass die Vorrichtung Verschiebemittel zum Verschieben des Schiebers des Fluidverteilers zwischen seinen beiden Positionen durch den Druckverlust des Fluids in der Laminarströmungsverengung (44) enthält.

2. Vorrichtung nach Anspruch 1,
   **dadurch gekennzeichnet, dass**
   die Verschiebemittel zwei durch den Schieber (52) getrennte Kammern (54, 56) enthalten, von denen die eine in Strömungsverbindung mit dem Einlass der Laminarströmungsverengung (44) und die andere in Strömungsverbindung mit dem Auslass der Laminarströmungsverengung (44) steht, wobei die Verschiebemittel ferner Rückstellmittel (68) enthalten, die dazu vorgesehen und ausgelegt sind, den Schieber (52) in seine erste Position zu bringen, wenn die Druckdifferenz zwischen dem Einlass und dem Auslass der Laminarströmungsverengung (44) unter einem vorbestimmten Schwellenwert liegt.

3. Vorrichtung nach Anspruch 2,
   **dadurch gekennzeichnet, dass**
   die Rückstellmittel des Schiebers eine Druckfeder (68) enthalten, die in der Kammer (56) angeordnet ist, die mit dem Ausgang der Laminarströmungsverengung (44) zwischen einer Seite des Schiebers (52) und einer Bodenwand der Kammer (56) verbunden ist.

4. Vorrichtung nach einem der Ansprüche 1 bis 3,
   **dadurch gekennzeichnet, dass**
   der Verteiler (46) zumindest einen mit einer Umgehungsleitung (66) der Einrichtung (48) verbundenen Fluidauslass aufweist, wobei der Schieber (52) des Verteilers (46) eine Fluidzirkulation zur Umgehungsleitung (66) zulässt, wenn sich der Schieber (52) in seiner zweiten Position befindet, und eine Fluidzirkulation in die Umgehungsleitung (66) verhindert, wenn sich der Schieber (52) in seiner ersten Position befindet.

5. Vorrichtung nach Anspruch 4,

**dadurch gekennzeichnet, dass**
die Umgehungsleitung (66) in einen Träger (74) der Einrichtung (48) integriert ist und sich zumindest teilweise in unmittelbarer Nähe der Einrichtung (48) zur Wärmeübertragung zwischen der Umgehungsleitung (66) und der Einrichtung (48) durch den Träger (74) hindurch erstreckt.

6. Vorrichtung nach einem der vorstehenden Ansprüche,
   **dadurch gekennzeichnet, dass**
   sie ein Überdruckventil (70) enthält, das in einem Kanal (72) angebracht ist, der die stromaufwärtige Seite des Verteilers (46) mit der stromabwärtigen Seite der Einrichtung (48) verbindet, wobei dieses Ventil (70) dazu ausgelegt ist, die Zirkulation von Fluid in den Kanal (72) zu gestatten, wenn der Druckverlust in der Einrichtung (48) größer als ein vorbestimmter Schwellenwert ist.

7. Vorrichtung nach einem der vorstehenden Ansprüche,
   **dadurch gekennzeichnet, dass**
   die Laminarströmungsverengung (44) aus einem Rohr mit rauer Innenfläche gebildet ist.

8. Vorrichtung nach Anspruch 7,
   **dadurch gekennzeichnet, dass**
   die Innenfläche des Rohres eine Rauigkeit aufweist, die durch einen $R_a$ von etwa 15 $\mu$m mit einer Genauigkeit von +/- 5% definiert ist.

9. Vorrichtung nach einem der vorstehenden Ansprüche,
   **dadurch gekennzeichnet, dass**
   die Laminarströmungsverengung aus einem Rohr gebildet ist, dessen Länge größer als sein Durchmesser ist.

10. Vorrichtung nach Anspruch 9,
    **dadurch gekennzeichnet, dass**
    das Rohr eine Länge in der Größenordnung von 30 cm mit einer Genauigkeit von +/- 1,5% und einen Durchmesser in der Größenordnung von 8,15 mm mit einer Genauigkeit von +/- 1,5% aufweist.

11. Turbotriebwerk, wie etwa Turbostrahltriebwerk oder Turboprop-Triebwerk für Flugzeuge,
    **dadurch gekennzeichnet, dass**
    es zumindest eine Vorrichtung nach einem der vorstehenden Ansprüche enthält.

12. Turbotriebwerk nach Anspruch 11,
    **dadurch gekennzeichnet, dass**
    es sich bei dem Fluid um Öl handelt und die Einrichtung ein Öl/Luft-Wärmetauscher (48) ist, der einem Öl/Treibstoff-Wärmetauscher (34) vorgelagert ist.

## Claims

1. A device for controlling the feed of fluid to equipment (48), such as a heat exchanger, the device comprising a fluid slide valve (46) mounted in a fluid circuit and including a slide (52) movable between two positions, a first position in which it allows the fluid to flow through the equipment (48), and a second position in which it prevents the fluid from flowing through the equipment (48), the device being **characterized in that** a laminar flow constriction (44) is arranged in the fluid circuit upstream from the slide valve (46), and **in that** it includes drive means for moving the slide of the slide valve between its two positions by means of the head loss of the fluid in the laminar flow constriction (44).

2. A device according to claim 1, **characterized in that** the drive means comprise two chambers (54, 56) separated by the slide (52), one of the chambers being in fluid flow communication with the inlet to the laminar constriction (44), and the other chamber being in fluid flow communication with the outlet from the fluid flow constriction (44), the drive means further comprising return means (68) designed and configured to bring the slide (52) into its first position when the pressure difference between the inlet and the outlet of the laminar constriction (44) is less than a predetermined threshold.

3. A device according to claim 2, **characterized in that** the return means of the slide comprise a compression spring (68) arranged in the chamber (56) that is connected to the outlet of the laminar constriction (44), between a face of the slide (52) and an end wall of said chamber (56).

4. A device according to any one of claims 1 to 3, **characterized in that** the slide valve (46) includes at least one fluid outlet connected to a parallel pipe (66) in parallel with the equipment (48), the slide (52) of the slide valve (46) allowing fluid to flow to the parallel pipe (66) when the slide (52) is in its second position, and preventing fluid from flowing in the parallel pipe (66) when the slide (52) is in its first position.

5. A device according to claim 4, **characterized in that** the parallel pipe (66) is incorporated in a support (74) of the equipment (48) and extends at least in part in the immediate proximity of the equipment (48) in order to transmit heat between the parallel pipe (66) and the equipment (48) through the support (74).

6. A device according to any preceding claim, **characterized in that** it includes a pressure release valve (70) mounted in a channel (72) connecting the upstream end of the slide valve (46) to the downstream end of the equipment (48), the release valve (70) being configured to allow fluid to flow in the channel (72) when the head loss in the equipment (48) is greater than a predetermined threshold.

7. A device according to any preceding claim, **characterized in that** the laminar constriction (44) is formed by a tube having a rough inside surface.

8. A device according to claim 7, **characterized in that** the inside surface of the tube possesses roughness defined by a coefficient $R_a$ of about 15 $\mu$m, with an accuracy of $\pm 5\%$.

9. A device according to any preceding claim, **characterized in that** the laminar constriction is formed by a tube having a length greater than its diameter.

10. A device according to claim 9, **characterized in that** the tube has a length of about 30 cm with an accuracy of $\pm 1.5\%$, and a diameter of about 8.15 mm, with an accuracy of $\pm 1.5\%$.

11. A turbine engine, such as an airplane turboprop or turbojet, **characterized in that** it includes at least one device according to any preceding claim.

12. A turbine engine according to claim 11, **characterized in that** the fluid is oil and the equipment is an oil/air heat exchanger (48) connected upstream from an oil/fuel heat exchanger (34).

**Fig. 1**

**Fig. 2**

**Fig. 3**

## RÉFÉRENCES CITÉES DANS LA DESCRIPTION

### Documents brevets cités dans la description

- FR 2951228
- FR 1061138
- FR 1157953
- US 3554222 A